# EUROPÄISCHE PATENTANMELDUNG

(11) **EP 3 922 507 A1**
(43) Veröffentlichungstag der Anmeldung: **15.12.2021**
(21) Anmeldenummer: 21178278.4
(22) Anmeldetag: 08.06.2021
(51) Int. Cl.: B60L 58/40, B60L 58/19, B60L 50/50, B60L 50/75

(54) **EFFIZIENTES HYBRID-FAHRZEUG**

(30) Priorität: 08.06.2020 DE 102020115119
(71) Anmelder: Deutsche Telekom AG, 53113 Bonn (DE)
(72) Erfinder: Huber, Michael, 67434 Neustadt a. d. W. (DE)
(74) Vertreter: Braun-Dullaeus Pannen Emmerling Patent- & Rechtsanwaltspartnerschaft mbB

(57) **Zusammenfassung**

Die vorliegende Erfindung betrifft ein Verfahren zum Betreiben eines Hybrid-Fahrzeugs aufweisend
eine erste von einer Brennstoffzelle gespeiste Betriebseinheit und
eine zweite von einem Akkumulator gespeiste Betriebseinheit,
wobei die erste und die zweite Betriebseinheit von einer intelligenten Steuerung des Fahrzeugs gesteuert werden und einen Elektromotor zur Fortbewegung des Fahrzeugs betrieben,
wobei die erste und die zweite Betriebseinheit den Elektromotor gleichberechtigt antreiben
und dass die erste Betriebseinheit möglichst dauerhaft eine konstante Grundleistung bereitstellt.

## Beschreibung

Die vorliegende Erfindung betrifft das technische Gebiet der alternativen Antriebstechnologien von Fahrzeugen und insbesondere ein Hybrid-Fahrzeug mit einer Wasserstoff-und einer Akkumulatorbetriebseinheit zum effizienten Betreiben eines Elektromotors.

In der Praxis sind auf den Straßen noch zumeist Fahrzeuge mit Verbrennungsmotoren anzutreffen, diese gelten jedoch in naher Zukunft als Auslaufmodelle.

Immer strengere Umweltauflagen und Forderung nach möglichst klimaneutraler Mobilität sorgen dafür, dass Fahrzeuge mit Verbrennungsmotoren mittel- bis langfristig vom Markt verdrängt werden. Da die Mobilität jedoch ein wichtiges Element unseres Wirtschaftssystems ist, gibt es bereits Ansätze Verbrennungsmotoren durch alternative Antriebstechnologien zu ersetzen.

Zwei mögliche alternative Antriebstechnologien sind das E-Auto und das H2-Auto (Wasserstoffauto). Sowohl das E-Auto und das H2-Auto sind prinzipiell praxistauglich und stehen in den Startlöchern, um die Verbrennungsmotoren abzulösen. Bei beiden Antriebstechnologien wird das Auto über einen Elektromotor angetrieben, der beim E-Auto über einen Akkumulator (Batterie) und beim H2-Auto über eine Brennstoffzelle gespeist wird. Die Energie, die bei beiden Antriebstechnologien benötigt wird, kann klimaneutral über erneuerbare Energien erzeugt werden.

In der Praxis ist man sich allerdings darüber einig, dass beide alternative Antriebstechnologien noch Entwicklungspotential aufweisen, da beide neben einigen Vorteilen auch noch zahlreiche Nachteile aufweisen. Diese Vor- und Nachteile sollen nachstehend kurz exemplarisch aufgelistet werden.

Vorteile E-Auto:
- Hoher Wirkungsgrad und Dynamik der Batterie;

Nachteile E-Auto:
- Geringe Kapazität der Batterien und damit vergleichsweise geringe Reichweite;
- Batterien sind extrem schwer und haben eine geringe Energiedichte (heute ca. 100-150Wh/kg); bei der Lithium-Ionen-Technologie sind zwar langfristig Energiedichten von bis zu 300Wh/Kg möglich, was jedoch bei 75kWh (ca. 400-600km Reichweite) immer noch ein Batteriegewicht von 250kg bedeuten würde;
- Ein Ladevorgang dauert lange im Vergleich zu einem herkömmlichen Tankvorgang (80%-Schnellladung mind. 30 Minuten, falls Schnellladestation überhaupt verfügbar sind);
- Wenig verfügbare Ladestationen/Ladeinfrastruktur;
- Fahrzeugheizung verbraucht Energie und kostet damit Reichweite;

Vorteile H2-Auto:
- Hohe Energiekapazität und damit hohe Reichweite bei vergleichsweise geringem Gewicht;
- H2 ist als transportabler Speicher für große Energiemengen gut geeignet (H2 ist keine Energiequelle, sondern ein hervorragender fast verlustfreier Energieträger);
- H2 kann schnell nachgetankt werden (je nach Menge 2-5 Minuten pro Fahrzeug);
- Abwärme der Brennstoffzelle kann zum Heizen des Autos genutzt werden;

Nachteile H2-Auto:
- Geringerer Wirkungsgrad (ca. 60%) im Vergleich zum E-Auto (teils wegen Abwärme der Brennstoffzelle);
- Schlechtere Dynamik (Lastwechsel) der Brennstoffzelle im Vergleich zur Batterie;
- H2 ist vergleichsweise teuer in Relation zu Strom;
- Wenige/kaum verfügbare H2-Tankstellen;

Beide Antriebstechnologien (e- und H2-Auto) haben nicht unerhebliche Nachteile im Vergleich zu den Fahrzeugen mit Verbrennungsmotoren, die einen schnellen Wechsel in eine halbwegs klimaneutrale Mobilität erschweren und damit in die Länge ziehen. Diese Nachteile bedürfen intelligente, neue Lösungen, werden jedoch den Wechsel nicht verhindern, da dieser aufgrund der problematischen Umweltsituation alternativlos ist.

Erste Ansätze beide Antriebstechnologien zu verbinden gibt es bereits. Heute werden schon H2-Autos angeboten, die neben der Brennstoffzelle eine kleine Batterie (mit wenigen KWh) als zusätzliche Energiequelle für den Elektromotor haben (z.B. Hyundai Nexo, Mercedes SUV GLC F-Cell). Die klein dimensionierte Batterie erweitert die Reichweite ein wenig (20-50Km) und erhöht die Dynamik des H2-Autos (mehr Leistung bei Laständerung). Die Batterie wird zur Energierückgewinnung beim Bremsvorgang genutzt und dadurch geladen. Die Brennstoffzelle ist jedoch bei diesen Varianten das Hauptaggregat des H2-Autos, aus dem abhängig von der Fahrsituation sehr variable hohe Leistungen (0 KW bis größer 100 KW) sehr dynamisch im Fahrbetrieb abgerufen werden.

Der vorliegenden Erfindung liegt daher die Aufgabe zu Grunde, die praktikable Nutzbarkeit der wasserstoffbasierten und der akkubasierten Antriebstechnologien in einem Hybrid-Fahrzeug zu erhöhen und somit die genannten Nachteile des Stands der Technik zumindest zum Teil zu beseitigen.

Erfindungsgemäß ist ein Verfahren zum Betreiben eines Hybrid-Fahrzeugs angegeben aufweisend
eine erste von einer Brennstoffzelle gespeiste Betriebseinheit und
eine zweite von einem Akkumulator gespeiste Betriebseinheit,
wobei die erste und die zweite Betriebseinheit von einer intelligenten Steuerung des Fahrzeugs gesteuert werden und einen Elektromotor zur Fortbewegung des Fahrzeugs betreiben. Prinzipiell können die erste Betriebseinheit und die zweite Betriebseinheit den Elektromotor des Fahrzeugs gemeinsam oder auch einzeln betreiben.

Es ist nun der Kern der Erfindung, dass die erste und die zweite Betriebseinheit den Elektromotor gleichberechtigt antreiben und dass die erste Betriebseinheit dauerhaft eine konstante Grundleistung bereitstellt. Eine Möglichkeit die konstante Grundleistung auszuwählen besteht darin, die konstante Grundleistung basierend auf den technischen Spezifikationen der Brennstoffzelle alleine auszuwählen, d. h. insbesondere unabhängig von anderen Parametern. Dies bietet vorteilhaft eine effiziente und technisch einfach umzusetzende Lösung. Eine weitere Möglichkeit ist es, die konstante Grundleistung basierend auf weiteren Fahrzeugparametern, gegebenenfalls auch unter Einbeziehung eines Cloud Service der mit dem Fahrzeug in Verbindung steht festzulegen. Dies bedingt zwar einen höheren technischen Aufwand, ermöglicht aber theoretisch eine weitere Effizienz Steigerung des Antriebssystems.

Nachfolgend werden die erste Betriebseinheit auch als Wasserstoff-Betriebseinheit und die zweite Betriebseinheit auch als Akku-Betriebseinheit bezeichnet. Die Akku-Betriebseinheit ist also nun nicht mehr nur ein reines "Add-On", wie bei den herkömmlichen Wasserstoffautos, sondern deutlich größer dimensioniert, insbesondere ähnlich wie in einem herkömmlichen Elektroauto der entsprechende Bauklasse, um das Hybrid-Fahrzeug gleichberechtigt betreiben zu können. Unter einem gleichberechtigten Betreiben ist zu verstehen, dass prinzipiell jeder der beiden Antriebseinheit in der Lage ist das Fahrzeug selbstständig fortzubewegen. Der Clou der Erfindung ist es nun, dass sich die Vor- und Nachteile von e- und H2-Autos zum Großteil nicht überschneiden, d.h. dass diese Technologien können sich in dem Hybrid-Fahrzeug ergänzen. Ein großer Nachteil einer Akku-Betriebseinheit ist die lange Ladezeit, diese wird nun erfindungsgemäß dadurch reduziert, dass eine konstante Grundleistung (die auch als Grundlast bezeichnet werden kann) von der Wasserstoff-Betriebseinheit bereitgestellt wird. Fährt das Hybrid-Fahrzeug beispielsweise eine lange Strecke mit konstanter Geschwindigkeit auf der Autobahn, kann somit seine gesamte angeforderte Fahrleistung mit der Wasserstoff-Betriebseinheit gespeist werden, wobei Wasserstoff an Wasserstofftankstellen ähnlich schnell aufgefüllt werden kann, wie dies heutzutage bei Benzin der Fall ist.

Bevorzugt wird die konstante Grundleistung in einem optimalen Arbeitsbereich der ersten Betriebseinheit betrieben. In diesem optimalen Arbeitsbereich ist die Brennstoffzelle besonders effizient, was zu einem möglichst geringen Wasserstoffverbrauch führt. Typischerweise handelt es sich bei dem optimalen Arbeitsbereich um einen Mittelleistungsbereich der Brennstoffzelle. Hat also eine Brennstoffzelle beispielsweise 30 kW Maximalleistung würde sie kontinuierlich dauerhaft in einem Mittelleistungsbereich von 15 KW betrieben werden.

In einer bevorzugten Ausführungsform schaltet die intelligente Steuerung die zweite Betriebseinheit zu, wenn eine vom Fahrzeug angeforderte Leistung die Grundleistung übersteigt und schaltet die zweite Betriebseinheit ab, wenn die vom Fahrzeug angeforderte Leistung niedriger ist als die Grundleistung. Dies hat den Vorteil, dass der Akkumulator der Akku-Betriebseinheit im Normalbetrieb also nur dann entleert wird, wenn die angeforderte Leistung, die Grundleistung übersteigt. Wie später noch dargestellt wird, gibt es allerdings je nach Verkehrssituation auch Fälle, in denen die intelligente Steuerung diesen Regelfall intelligent außer Kraft setzt.

In einer bevorzugten Ausführungsform wird der Akkumulator der zweiten Betriebseinheit von der ersten Betriebseinheit geladen, wenn die vom Fahrzeug angeforderte Leistung niedriger ist als die Grundleistung. Dies hat den Vorteil, dass der Akkumulator zusätzlich zu der rückgewonnenen auch von der Wasserstoff-Betriebseinheit geladen wird. Auf diese Weise kann die Ladezustand des Akkumulators hochgehalten werden, da dieser bei dem gleichberechtigten Betrieb in dem erfindungsgemäßen Hybrid- Fahrzeug deutlich intensiver genutzt wird als wenn er bloß ein "Add-On" wäre. Durch das dauerhafte Betreiben in dem optimalen Arbeitsbereich, wird der Akkumulator zusätzlich möglichst effizient aufgeladen.

Bevorzugt werden die erste und die zweite Betriebseinheit in Reihe geschaltet, wenn die vom Fahrzeug angeforderte Leistung die Grundleistung übersteigt und parallel geschaltet werden, wenn die vom Fahrzeug angeforderte Leistung niedriger ist als die Grundleistung. Dies hat den Vorteil, dass eine solche Schaltung in einem Fall das Bereitstellen zusätzlicher Energie und im anderen Fall das Aufladen ermöglicht.

Zweckmäßig wird die Grundleistung reduziert, wenn die vom Fahrzeug angeforderte Leistung niedriger ist als die Grundleistung und wenn der Akkumulator der zweiten Betriebseinheit vollständig geladen ist. Dies hat den Vorteil, dass es in den meisten Fällen energetisch günstiger ist, die Wasserstoff-Betriebseinheit mit einer Leistung zu betreiben, die geringer ist als der optimierte Arbeitsbereich, wenn die ansonsten überschüssige Leistung nicht anderweitig genutzt werden kann.

Die intelligente Steuerung kann in einer Datenverbindung mit einem Cloud Service steht und/oder Informationen von einem dem Fahrzeug zugeordneten Navigationssystem erhalten um Informationen über eine zu erwartende angeforderte Leistung zu prognostizieren. Dies hat den Vorteil, dass der Cloud-Service effizienten umweltfreundlichen Betrieb des Hybrid-Fahrzeugs fördern kann, indem eine vorausschauende Verkehrsflusssteuerung durch den Cloud-Service bereitgestellt wird. Für die technischen Details der Verkehrsflussteuerung wird hierbei auf die deutsche Patentanmeldung mit der Anmeldenummer 10 2020 111 148.7 verweisen, deren Inhalt hiermit in die Offenbarung aufgenommen wird. Der Gedanke dieser Anmeldung kann wie folgt zusammengefasst werden.

Die Steuerung eines Verkehrsflusses von Fahrzeugen auf öffentlichen Straßen umfassend die Schritte: Es wird eine Cloud-Plattform in einem Kommunikationsnetzwerk bereitgestellt und auf dieser Cloud-Plattform werden Infrastrukturinformationen von Straßen hinterlegt. Dann wird eine Datenverbindung zwischen Fahrzeugen und der zentralen Verkehrsflusssteuerungseinheit vermittels des Kommunikationsnetzwerks aufgebaut. Zusätzlich übertragen die Fahrzeuge Parameter an die Cloud-Plattform, wobei ein auf der Cloud-Plattform implementierter Algorithmus auf Basis der Parameter und der Infrastrukturinformationen einen optimierten Verkehrsfluss für die Fahrzeuge und ein individuelles Fahrprofil für ein einzelnes Fahrzeug erstellt, wobei das individuelle Fahrprofil aus dem optimierten Verkehrsfluss extrahiert wird.

Je nach Verkehrssituation kann es nämlich vorteilhafter sein, dass Hybrid-Fahrzeug wahlweise nur mit der Akku-Betriebseinheit, nur mit der Wasserstoff Betriebseinheit oder mit beiden gemeinsam zu betreiben. Auf diese Art und Weise kann der intelligenten Steuerung bekannt gemacht werden in welcher Entfernung sich Ladestationen befinden und auch welche räumliche Dichte diese Ladestationen in dem von dem Fahrzeug zu durchfahrenden Gebiet aufweisen. Hierdurch kann auf vorteilhafte Weise nicht nur eine nächste Ladestation, sondern vorausschauend auch zukünftige Ladestationen berücksichtigt werden, wenn die intelligente Steuerung ermittelt, wie die Leistung zwischen der ersten Betriebseinheit unter zweiten Betriebseinheit verteilt werden soll.

Wird der intelligenten Steuerung, beispielsweise durch das Navigationssystem, mitgeteilt, dass der Fahrer nur noch eine kurze Strecke bis zu einem Ziel mit einer Elektroladestation (beispielsweise bei dem Fahrer zu Hause) hat, so kann diese Strecke, wenn der Ladezustand des Akkumulators dazu ausreicht, lediglich mit der Akku-Betriebseinheit gefahren werden, da der Fahrer sein Fahrzeug dann ohnehin an der Elektroladestation bequem aufladen kann. Das für diese Anwendungen notwendige schnelle 5-G-Netz mit seinen niedrigen Latenzzeiten, ist bereits teilweise vorhanden und wird in den nächsten Jahren flächendeckend ausgebaut.

Gemäß einem weiteren Aspekt der Erfindung ist ein Hybrid-Fahrzeug angegeben, wobei das Hybrid-Fahrzeug zur Durchführung eines der vorstehend beschriebenen Verfahren ausgebildet ist und folgendes umfasst:
eine erste von einer Brennstoffzelle gespeiste Betriebseinheit,
eine zweite von einem Akkumulator gespeiste Betriebseinheit,
einen Elektromotor zur Fortbewegung des Fahrzeuges, wobei zwischen dem Elektromotor und der ersten und der zweiten Betriebseinheit eine Wirkverbindung ausgebildet ist und
eine intelligente Steuerung, die mit der ersten und der zweiten Betriebseinheit in einer Signalverbindung steht, um die erste und die zweite Betriebseinheit gemäß dem vorstehend beschriebenen Verfahren zu steuern.

Durch das erfindungsgemäße Hybrid-Fahrzeug werden klimaneutrale Antriebstechniken im Individualverkehr ermöglicht. Eine Optimierung des Energieeinsatzes (gesteuert über Cloud-Service/Cloud-Plattform) ermöglicht eine hohe Reichweite bzw. langstreckenfähig der Autos. Energie kann schnell nachgetankt werden und es werden mehrere Alternativen bereitgestellt, um Energie nachzutanken. Dies alles ermöglicht einen schnelleren Wechsel auf klimaneutrale Antriebstechniken, weniger Energieverbrauch, weniger Energiekosten und mehr Umweltschutz. Das nach tanken kann zeitsparend erfolgen und zugleich kann eine effiziente Kombination von Energienachladepunkten per Cloudplattform ein neues Geschäftsfeld schaffen.

Im Folgenden werden bevorzugte Ausführungsbeispiele der vorliegenden Erfindung unter Bezugnahme auf die begleitenden Figuren erläutert:
- Fig. 1:: zeigt schematisch die von einem Hybrid-Fahrzeug angeforderte Leistung und wie diese von den beiden Antriebstechnologien über die Zeit bereitgestellt wird.
- Fig. 2:: zeigt schematisch ein Hybrid-Fahrzeug und die intelligente Steuerung des Hybrid-Fahrzeugs.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

Eine grundlegende Idee der Erfindung ist es, die Vor- und Nachteile einer Wasserstoff-Betriebseinheit 205 und einer Akku-Betriebseinheit 210 bei einem Hybrid-Fahrzeug 200 so zu kombinieren, dass sich deren jeweilige Stärke ergänzen und die Schwächen möglich nicht zum Tragen kommen. Erste Ansätze beide Technologien in einem Auto einzusetzen wurden gemacht, jedoch als reines Add On, um beim H2-Auto mehr Leistung im Spitzenlastbereich zu bekommen.

Der Ansatz im Rahmen dieser Erfindung geht hier viel weiter und verzahnt beide Antriebstechnologien zu einer gemeinsamen Antriebstechnik, die abhängig von der Verkehrssituation, der Betriebszustände des Autos, der gewählten Strecke, der verfügbaren Energienachladeinfrastruktur, der klimatischen Rahmenbedingungen, beide Technologien optimal und gleichzeitig nutzt.

Die Brennstoffzelle 206 der Wasserstoff-Betriebseinheit 205 hat ihren idealen und effizientesten Betriebszustand im stabilen Teillastbereich (vergleichbar mit einem Diesel), d.h. für die Dynamik des Hybrid-Fahrzeugs 200 ist im Normalfall die Akku-Betriebseinheit 210 vorgesehen, für eine gleichmäßige Grundleistung die Wasserstoff-Betriebseinheit 205. Batterie/Akkumulatoren und Brennstoffzelle werden durch eine intelligente Steuerung 220 und die Cloudplattform 240 je nach Bedarf gleichzeitig oder einzeln eingesetzt.

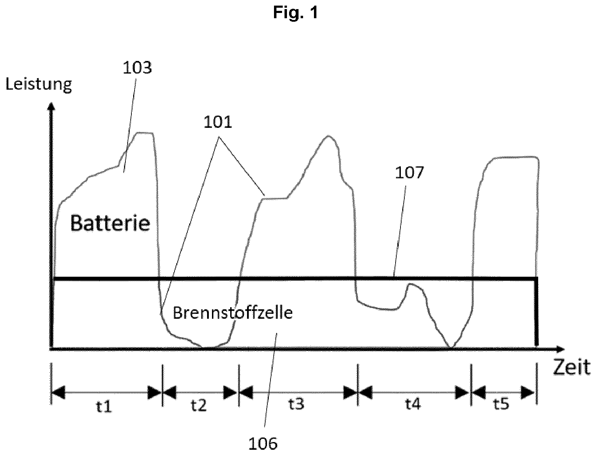

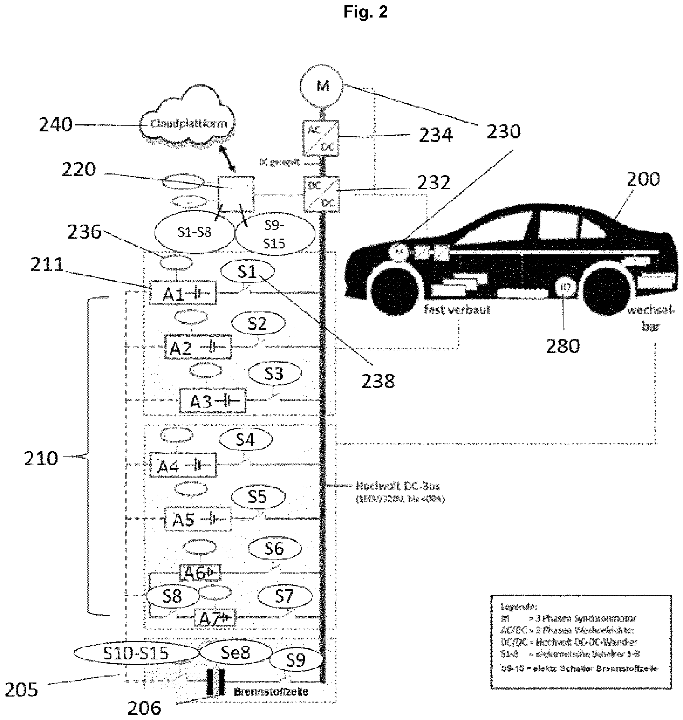

In Fig. 1 ist das Prinzip schematisch aufgezeigt:
Eine "kleine" Brennstoffzelle 106 (z.B. mit 30 KW Maximalleistung) läuft im Bedarfsfall dauerhaft konstant im Mittelleistungsbereich 107 (z.B. 15KW) und deckt damit einen Teil der angeforderten Leistung 101 im Fahrtbetrieb des Hybrid-Fahrzeuges ab. In Fig. 1 liefert die Brennstoffzelle im Zeitraum t1, t3 u. t5 seine 15KW Leistung ab, der Rest 103 der angeforderten Leistung und vor allem die Dynamik wird von der den Batterien/Akkumulatoren 211 der Akku-Betriebseinheit 210 übernommen. Die vorliegend beispielhaften sieben Akkumulatoren 211 sind in Fig. 2 als A1 bis A7 bezeichnet.

In den Zeiträumen t2 u. t4 liefert die Brennstoffzelle weiterhin die 15KW Leistung ab, aber jetzt nur noch teilweise zum Betrieb des Motors und lädt nebenbei wieder die Akkumulatoren 211 A1 bis A7.

Nachfolgend ist eine bespielhafte Dimensionierung für ein Mittelklasse Hybrid-Fahrzeug (Golf-Klasse) angegeben:
- Kleine Brennstoffzelle 206 mit 30KW-Maximalleistung, mit 15KW im Mittelleistungsbereich betrieben
- 3,5kg Wasserstofftank 280; zusätzliche H2-Reichweite ca. 450Km; Betankungszeit ca. 2 Min.
- Abwärme der Brennstoffzelle kann den PKW heizen
- 75KWh Akkumulatoren 211 (nächste Generation!), 250kg, Batterie-Reichweite ca. 550Km
- PKW-Maximalleistung 100 KW (136PS)

Hieraus folgt eine Reichweite des Hybrid-Fahrzeugs von ca. 1000 Km, auch bei kalten Klimabedingungen

Um den effizienten Einsatz der Brennstoffzelle 206 im gleichmäßigen Mittelleistungsbereich 107 zu gewährleisten, wird eine intelligente Steuerung 220 und die Cloudplattform 240 eingesetzt, welche die Batterien 211 abhängig von der tatsächlichen und/oder vom der prognostizierten angeforderten Leistung lädt oder entlädt.

Fig. 2 zeigt schematisch ein Hybrid-Fahrzeug und die intelligente Steuerung des Hybrid-Fahrzeugs. Hierbei wird insbesondere die in EP 3 605 648 A1 beschriebene intelligente Steuerung weiterentwickelt und für das Hybrid-Fahrzeug 200 modifiziert. Bezüglich der Ausführbarkeit der intelligenten Steuerung wird also auf das Dokument EP 3 605 648 A1 vollumfänglich Bezug genommen.

Ferner zeigt Fig. 2 als weitere Variante, das Batterie-Schnellwechselsystem aus der EP 3 605 648 A1, bei dem die Akkus der e-Autos nicht zeitaufwendig nachgeladen, sondern einfach in wenigen Minuten ausgetauscht werden können.

Demnach zeigt Fig. 2, dass das Hybrid-Fahrzeug 200 von einem Umrichter geführten 3-Phasen Synchronmotor 230 angetrieben wird. Ein Hochvolt DC-DC-Wandler 232 und ein 3-Phasen Wechselrichter 234 sind bidirektional für den Fahrbetrieb und Ladevorgang bzw. die Rekuperation ausgelegt. Die geregelte Traktionsspannung beträgt ca. 320V. Die Akkublöcke A1-A5 sind jeweils mit 88 Lilonen-Zellen bestückt. Akkublock 6 und 7 (Handwechselmodule) sind jeweils mit 44 Zellen bestückt.

Bei voller Akku-Bestückung "kann" das Hybrid-Fahrzeug 200 mit 5 parallelen 320V-Akku-Zweigen betrieben werden. Über die Sensoren 236 1-7 erkennt die Steuerung die jeweilige Bestückung und den Ladezustand der Akkublöcke. Über die elektronischen Hochleistungsschalter 238 S1-8 können die Akkublöcke je nach Bedarf zugeschaltet werden. Die intelligente Steuerung 220 übernimmt das Management der Verschaltung und Entladung der jeweiligen Akkublöcke A1-A7

Damit können beispielsweise vor dem Wechsel der Akkublöcke A4-7, diese gezielt entladen werden, ohne an die Reserven der fest verbauten Akkublöcke A1-3 zu gehen. Auf der geplanten Fahrtstrecke kann das Management des Akkutausches zwischen der intelligenten Steuerung 220 und einer KFZ-Akku-Wechselplattform (Cloudplattform) intelligent über das Internet organisiert werden.

Als weitere Ausführungsvariante sind anstatt des Fig. 2 zuvor dargestellten zentralen Hochvolt DC-DC-Wandlers auch einzelne dezentrale Hochvolt DC-DC-Wandler in jedem der Akku-Zweige möglich. Hierdurch könnten auch unterschiedliche Akku-Spannungen/-Bestückungen in den jeweiligen Zweigen miteinander zu einem einheitlichen geregelten Hochvolt-DC-Bus kombiniert werden."

Für das Hybrid-Fahrzeug 200 wird diese Anordnung nun um die Wasserstoff-Betriebseinheit 205 erweitert, um die vorstehend beschriebenen Vorteile des Hybrid-Fahrzeugs technisch umsetzen zu können. Ferner wurden die Verschaltungsmöglichkeiten erweitert, um die Brennstoffzelle 206 bei Bedarf über die elektronischen Hochleistungsschalter S9-15 in Parallel oder in Reihe zu den einzelnen Batterieblöcken A1-A7 zu schalten, um die Wasserstoff-Betriebseinheit 205 als Grundleistungseinheit bei der Motorspeisung zu unterstützen oder die Batterien bei geringer Last im Fahrbetrieb zu laden. Ein Sensor Se 8 überwacht den Betriebszustand der Brennstoffzelle 206. Die intelligente Steuerung 220 übernimmt das Management des Betriebes, der Verschaltung, Entladung, Ladung der jeweiligen Akkublöcke und der Brennstoffzelle.

Die intelligente Steuerung 220 des Hybrid-Fahrzeugs 200 steht mit einer Cloudanwendung 240 bzw. einem Cloud-Service 240 in ständiger Verbindung. Um den Einsatz der Akku-Betriebseinheit 210 und der Wasserstoff- Betriebseinheit 205 vorausschauend und effizient zu steuern. Eine mögliche Zielvorgabe ist es hier diesbezüglich die Leistungsdynamik im Fahrbetrieb bei durch den gezielten Einsatz der Akku-Betriebseinheit 210 zu regeln und ansonsten die Grundleistung durch die Wasserstoff-Betriebseinheit 205 bereitzustellen. Um den Cloud-Service 240 effizient zu nutzen bedarf es der ständigen Interaktion zwischen dem Cloud-Service 240 und der intelligenten Steuerung 220 des Hybrid-Fahrzeugs 200, dies ermöglicht die vorausschauende und damit effiziente Steuerung der jeweiligen Betriebseinheiten 205,210 (z.B. Brennstoffzelle frühzeitig zu- / abschalten, um teureren Wasserstoff möglichst effizient einzusetzen). Wann und wie die Brennstoffzelle 206 zugeschaltet werden soll, erfordert einen vorausschauenden Blick auf Rahmenparameter der Fahrt wie etwa H2-Menge, Batterieladestand, geplante Strecke, Route, Verkehrssituation, Verkehrsfluss, Möglichkeiten für H2-Betankung oder Batterie-Ladung bzw. Wechsel incl. Reservierung, klimatischen Rahmenbedingungen, Betriebszustände des Autos, Fahrerwünsche.

Beispielsweise ist eine kurze Stadttour im Hochsommer bei zähfließendem Verkehr und vollen Batterien unter der Beteiligung der Brennstoffzelle 206 energetisch ungünstig. Im Winter ist es beispielsweise sinnvoll, die Brennstoffzelle 206 noch stärker zu nutzen, da deren Abwärme zum Heizen der Fahrgastzelle genutzt werden kann. Bei niedrigem Batterieladezustand ist der Einsatz der Brennstoffzelle 206 als Grundlasteinheit ebenfalls vorteilhaft.

In dieser Hinsicht gibt es viele Konstellationen, die nur über ein gutes Zusammenspiel des Cloud-Service 240 und den Parametern aus dem Hybrid-Fahrzeug 200 optimal und effizient gesteuert werden können.

Das Zusammenspiel der intelligenten Steuerung 220 im Hybrid-Fahrzeug 200 und der Cloudanwendung 240 im Netzt stellt sicher, dass die Hybrid-Fahrzeuge 200 optimiert nach Sparsamkeit, Mobilitätssicherheit bei effizienter Ladungs-/Betankungsdauer und Fahrerwünschen unterwegs sind.

Bei nicht verfügbarer Batterieladeinfrastruktur und gleichzeitig genügend verfügbarem Wasserstoff, ist eine Ladung der Batterien im Bedarfsfall auch im parkenden Zustand vorstellbar. Da Wasserstoff (ca. 7€/100km) jedoch teurer und weniger effizient wie Strom ist (ca. 4€/100km), sollte das nicht die Regel sein.

Als weitere Ausführungsform, kann das Autodach mit flexiblen Solarzellen laminiert sein, welche die Batterien bei genügend Sonneneinstrahlung ständig nachladen. Die dafür erforderliche Elektronik (DC/DC-Wandler) ist im zuvor aufgeführten Schaubild (Fig. 2) bereits vorhanden und kann für die Solarzellen einfach mitgenutzt werden.

Beispielhafte Dimensionierung: 3m² Solarzellen; 0,3 KW-Peak; bei 1600 Sonnenstunden/a entspricht das ca. 480KWh/a. Wenn das Hybrid-Fahrzeug 200 bei Sonne häufig draußen steht, kann eine nicht unerhebliche Nachladung der Batterien erzielt werden, welches wiederum die Effizienz des Hybrid-Fahrzeugs 200 weiter steigert.

Der Wasserstoff sollte dezentral über Power-to-Gas-Anlagen mit erneuerbaren Energien produziert werden, um eine halbwegs klimaneutrale Erzeugung des Energieträgers zu gewährleisten.

## Patentansprüche

1. Verfahren zum Betreiben eines Hybrid-Fahrzeugs aufweisend
eine erste von einer Brennstoffzelle (206) gespeiste Betriebseinheit (205) und
eine zweite von einem oder mehreren Akkumulatoren (211) gespeiste Betriebseinheit (210),
wobei die erste und die zweite Betriebseinheit (205, 210) von einer intelligenten Steuerung (220) des Hybrid-Fahrzeugs (200) gesteuert werden und einen Elektromotor (230) zur Fortbewegung des Fahrzeugs (200) betrieben,
**dadurch gekennzeichnet,**
**dass** die erste und die zweite Betriebseinheit (205, 210) den Elektromotor (230) gleichberechtigt antreiben
und **dass** die erste Betriebseinheit (205) dauerhaft eine konstante Grundleistung (107) bereitstellt.

2. Verfahren nach Anspruch 1, **dadurch gekennzeichnet, dass** die konstante Grundleistung (107) in einem optimalen Arbeitsbereich der ersten Betriebseinheit (205) betrieben wird.

3. Verfahren nach einem der vorhergehenden Ansprüche, **dadurch gekennzeichnet, dass** die intelligente Steuerung (220) die zweite Betriebseinheit (210) zuschaltet, wenn eine vom Fahrzeug angeforderte Leistung (101) die Grundleistung übersteigt und dass die intelligente Steuerung (220) die zweite Betriebseinheit (210) abschaltet, wenn die vom Fahrzeug (200) angeforderte Leistung (101) niedriger ist als die Grundleistung (107).

4. Verfahren nach Anspruch 3, **dadurch gekennzeichnet, dass** der Akkumulator (211) der zweiten Betriebseinheit (210) von der ersten Betriebseinheit (205) geladen wird, wenn die vom Fahrzeug (200) angeforderte Leistung (101) niedriger ist als die Grundleistung (107) ist.

5. Verfahren nach Anspruch 4, **dadurch gekennzeichnet, dass** die erste und die zweite Betriebseinheit (205, 210) in Reihe geschaltet werden, wenn die vom Fahrzeug angeforderte Leistung (101) die Grundleistung übersteigt und dass die erste und zweite Betriebseinheit (205, 210) parallel geschaltet werden, wenn die vom Fahrzeug angeforderte Leistung niedriger ist als die Grundleistung (107).

6. Verfahren nach einem der Ansprüche 4 oder 5, **dadurch gekennzeichnet, dass** die Grundleistung (107) reduziert wird, wenn die vom Fahrzeug (200) angeforderte Leistung (101) niedriger ist als die Grundleistung (107) und wenn der Akkumulator (211) der zweiten Betriebseinheit (210) vollständig geladen ist.

7. Verfahren nach einem der vorhergehenden Ansprüche, **dadurch gekennzeichnet, dass** die intelligente Steuerung (220) in einer Datenverbindung mit einem Cloud-Service (240) steht und/oder Informationen von einem dem Fahrzeug zugeordneten Navigationssystem erhält um Informationen über eine zu erwartende angeforderte Leistung zu prognostizieren.

8. Hybrid-Fahrzeug ausgebildet zur Durchführung eines der vorstehend beschriebenen Verfahren umfassend
eine erste von einer Brennstoffzelle gespeiste Betriebseinheit (205),
eine zweite von einem Akkumulator gespeiste Betriebseinheit (210),
einen Elektromotor (230) zur Fortbewegung des Hybrid-Fahrzeuges (200), wobei zwischen dem Elektromotor und der ersten und der zweiten Betriebseinheit eine Wirkverbindung ausgebildet ist und
eine intelligente Steuerung (220), die mit der ersten und der zweiten Betriebseinheit in einer Signalverbindung steht, um die erste und und die zweite Betriebseinheit gemäß dem vorstehend beschriebenen Verfahren zu steuern.
